# EUROPEAN PATENT APPLICATION

(11) **EP 4 289 635 A1**
(43) Date of publication of application: **13.12.2023**
(21) Application number: 23177685.7
(22) Date of filing: 06.06.2023
(51) Int. Cl.: B60C 19/08, B60C 9/18

(54) **TIRE WITH A CONDUCTIVE TREAD CHIMNEY COMPONENT**

(30) Priority: 07.06.2022 US 202217805718
(71) Applicant: The Goodyear Tire & Rubber Company, Akron, OH 44316 (US)
(72) Inventor: REGNIER, Antoine Francois, B-6717 Attert (BE); GABRIEL, Sabine Chantal, B-4920 Harze (BE); KAES, Christian, L-9184 Schrondweiler (LU)
(74) Representative: Kutsch, Bernd

(57) **Abstract**

A tire (10, 110) is disclosed including axially spaced apart annular bead cores (12, 112); a carcass ply (14, 114) extending between the bead cores; a belt package (24, 124) arranged radially outwardly of the carcass ply and comprising an overlay coat (25, 125); a tread (20, 120) disposed radially outwardly of the belt package and comprising a tread band (22a, 22b. 122a, 122b) and a tread base (23, 123) adjacent the overlay coat; a sidewall (30, 130) overlying the carcass in a region between the belt package and one of the bead cores; a chafer portion (32, 132) adjacent to a radially inner portion of the sidewall and positioned around a portion of the bead core for contacting a rim; and a shoulder wedge (28, 128) arranged in a shoulder portion of the tire between the sidewall and the belt package, the shoulder wedge being at least partially inserted between the belt package and the carcass ply. The tread (20, 120) includes a tread chimney component (40, 140) extending from the shoulder wedge to the rolling surface, at least part of the tread chimney component extending across the tread band. The overlay coat, the tread band except for the tread chimney component, the tread base and the sidewall are made from non-conductive rubber. A conductive path between the rolling surface and the rim is provided across the tread chimney component (40, 140), the shoulder wedge (28, 128), the carcass ply (14, 114) and the chafer portion (32, 132).

## Description

### Field of the Invention

The invention relates to the field of vehicle tires. More particularly, the invention addresses the problem of low electrical conductivity encountered in modern tires made with rubber mixes that reduce the rolling resistance.

### Background of the Invention

To reduce CO₂ emissions or fuel consumption of vehicles, tire manufactures are solicited to provide tires having improved (reduced) rolling resistance. To reduce the rolling resistance of tires, rubber mixes traditionally used in the tire carcass and the tread need be replaced by less hysteric rubbers. A way to achieve this is to reduce the carbon black content of the rubbers and to use other reinforcement agents, such as, e.g., silica. Accordingly, modern tires may comprise rubber mixes containing as their principal filler electrically non-conducting fillers, such as, e.g., silica. Accordingly, tires exhibiting good performance in terms of rolling resistance are currently considered as challenging in terms of electrical conductivity, which is needed in practice to prevent charge build-up between ground and the vehicle.

US 2013/284330 A1 discloses a pneumatic tire having a carcass ply, a tread rubber, a side wall rubber and a rim strip rubber. A topping rubber of the carcass ply and the side wall rubber are formed by a non-conductive rubber. The rim strip rubber is formed by a conductive rubber. A side conductive layer formed by the conductive rubber is provided between the side wall rubber and the carcass ply. The side conductive layer is connected to the tread rubber and the rim strip rubber. A conductive route reaching the outer end of the side conductive layer from a ground-contacting surface is constructed in the tread rubber.

US 2013/098516 A1 discloses a diametrical conductive portion extending in a tire diametrical direction. The diametrical conductive portion is provided at least in a nonconductive position in a side rubber portion which is constructed by a side wall rubber and a rim strip rubber. A conductive branch portion is provided so as to be branched from the diametrical conductive portion, extend to at least one in a thickness direction of the side rubber portion and pass through an inner portion of the side rubber portion. The conductive branch portion is arranged at a position which sections at least half position in the thickness direction of the side rubber portion into an outer side in a tire diametrical direction and an inner side in the tire diametrical direction, and is formed by a conductive rubber which has a different hardness from a rubber hardness of the side rubber portion.

WO 2018/111650 A1 relates to a tire that includes at least one annular structure configured to interface with a wheel. The tire also includes a circumferential tread disposed in a crown region of the tire and an intermediate elastomeric layer having a conductive bleeder cord. The conductive bleeder cord extends from the annular structure to at least a middle third of a tread width and includes a metallic component that conducts electric charge and a textile component that permits gas evacuation.

US 2006/102264 A1 discloses a tire consisting of a crown zone with an outer surface intended to come in contact with the ground and comprising means to enable electricity to be conducted between the ground and a bead area designed to ensure contact between the wheel and the tire, whose constituent in contact with the wheel is electrically conductive, and a sidewall zone designed to connect the crown zone to the bead area. The constituents of the sidewall zone are made from materials with very low electrical conductivity and the tire comprises at least one conductive strip, of small thickness and width, made from an electrically conductive material and arranged radially along a path that extends from the interior part of the crown zone, with which it is in contact, to the bead area, where it is in contact with the said constituent designed to be in contact with the wheel.

WO 2020/227459 A1 relates to a rubber composition for a tire tread chimney component. The composition includes a sulfur-vulcanizable elastomer and an electrically conductive polymer. The rubber composition is further defined by an absence of electrically conductive carbon black. The sulfur-vulcanizable elastomer is selected from the group consisting of natural rubber, polybutadiene, polyisoprene, styrene butadiene rubber, nitrile rubber, and combinations thereof. The sulfur-vulcanizable elastomer and the electrically conductive polymer are substantially evenly mixed together. In the tire, and upon curing, the tire tread chimney component provides a dissipative pathway for static electricity from the tire to the ground in operation.

### Summary of the Invention

The invention relates to a tire in accordance with claim 1 or 6 respectively.

Dependent claims refer to preferred embodiments of the invention.

In a first preferred aspect, the invention relates to a tire, including; axially spaced apart annular bead cores; a carcass ply extending between the bead cores; a belt package arranged radially outwardly of the carcass ply, the belt package comprising an overlay coat; a tread disposed radially outwardly of the belt package, the tread comprising a tread band providing a radially outer rolling surface of the tire and a tread base adjacent the overlay coat; a sidewall overlying the carcass in a region between the belt package and one of the bead cores; a chafer portion adjacent to a radially inner portion of the sidewall and positioned around at least a portion of the bead core for contacting a rim; anda shoulder wedge arranged in a shoulder portion of the tire between the sidewall and the belt package, the shoulder wedge at least partially inserted between the belt package and the carcass ply. The tread includes a tread chimney component extending from the shoulder wedge to the rolling surface. At least part of the tread chimney component extends across the tread band. The overlay coat, the tread band except for the tread chimney component, the tread base and the sidewall are made from non-conductive rubber. A conductive path between the rolling surface and the rim is provided across the tread chimney component, the shoulder wedge, the carcass ply and the chafer portion.

According to preferred embodiments, the chafer portion may include a radially innermost toe guard and a chafer adjacent to the toe guard and to the sidewall.

Both the toe guard and the chafer may be made from conductive rubber.

The carcass ply may include a conductive ply coat extending at least from the shoulder wedge to the chafer portion. The conductive ply coat could also extend over the entire carcass ply.

According to preferred embodiments, the tread chimney component comprises a chimney base adjacent the overlay coat and a chimney extending across the tread band from the chimney base to the rolling surface.

The chimney could be located substantially in an equatorial plane of the tire. Alternatively, the chimney is located axially offset the equatorial plane of the tire. Embodiments with plural chimneys are also possible.

The chimney base may replace the tread base between the chimney and the shoulder wedge. Alternatively, the chimney base could replace only part of the height of the tread base between the chimney and the shoulder wedge. In that case, the chimney base could be adjacent the residual height of the tread base between the chimney and the shoulder wedge.

In a second preferred aspect, the invention relates to a tire, including: first and second axially spaced apart annular bead cores; a carcass ply extending between the first and second bead cores; a belt package arranged radially outwardly of the carcass ply, the belt package comprising an overlay coat; a tread disposed radially outwardly of the belt package, the tread comprising a tread band providing a radially outer rolling surface of the tire and a tread base adjacent the overlay coat; a first and a second sidewall overlying the carcass in a region between the belt package and the first and the second bead core, respectively; a first chafer portion adjacent to a radially inner portion of the first sidewall and positioned around at least a portion of the first bead core for contacting a rim; a second chafer portion adjacent to a radially inner portion of the second sidewall and positioned around at least a portion of the second bead core for contacting the rim; anda first shoulder wedge arranged in a first shoulder portion of the tire between the first sidewall and the belt package, the first shoulder wedge at least partially inserted between the belt package and the carcass ply. The tread band includes a tread chimney component extending from the first shoulder wedge to the rolling surface. At least part of the tread chimney component extends across the tread band. The overlay coat, the tread band except for the tread chimney component, the tread base and the first and second sidewalls are made from non-conductive rubber. A conductive path between the rolling surface and the rim is provided across the tread chimney component, the first shoulder wedge, the carcass ply and the first chafer portion.

The tire may comprise a second shoulder wedge arranged in a second shoulder portion of the tire between the second sidewall and the belt package, the second shoulder wedge being located at least partially inserted between the belt package and the carcass ply.

The second shoulder wedge could be made from non-conductive rubber. Alternatively, the second shoulder wedge could be made from conductive rubber. In particular, further conductive path between the rolling surface and the rim may be provided across the tread chimney component, the second shoulder wedge, the carcass ply and the second chafer portion.

Each of the first and second chafer portions may include a radially innermost toe guard and a chafer adjacent to the toe guard and to the first or second sidewall.

The carcass ply may include a conductive ply coat extending at least from the first shoulder wedge to the first chafer portion.

According to preferred embodiments, the tread chimney component may comprise a chimney base adjacent the overlay coat and a chimney extending from the chimney base to the rolling surface. The chimney may correspond to the part of the tread chimney component that extends across the tread band.

The chimney could be located substantially in an equatorial plane of the tire or axially offset that plane.

According to a preferred embodiment, the chimney base may extend axially from the first shoulder wedge to the chimney without extending axially beyond the chimney. In other words, the chimney base may have an axial termination at the chimney.

According to preferred embodiments, the chimney base could extend axially from the first shoulder wedge to the second shoulder wedge. This may be particularly desirable when the second shoulder wedge is made from conductive rubber and when a further conductive path between the rolling surface and the rim is provided across the tread chimney component, the second shoulder wedge, the carcass ply and the second chafer portion.

### Definitions

As used herein, the term "rubber" is intended to include both natural rubber compositions and synthetic rubber compositions. Unless otherwise specified, "rubber" designates a cured rubber (typically obtained from unsaturated rubber by sulfur or non-sulfur vulcanization). The rubber need not be completely cured, i.e., its molecular chains may contain residual cure sites (e.g., allylic positions) available for crosslinking with other molecular chains. The expression "rubber composition", "compounded rubber" and "rubber compound" may be used interchangeably to refer to rubber (elastomer) which has been blended or mixed with various ingredients and materials, e.g., reinforcing fillers, such as carbon black, precipitated amorphous silica, or the like, and then cured. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers.

The expression "conductive rubber", as used herein, designates rubber having a volume resistivity at room temperature (20°C) of less than 10⁸ Ω·cm, or, preferably, of less than 10⁶ Ω·cm.

Conductive rubber may contain carbon black as a reinforcing agent in sufficient amount to confer conductivity. A conductive rubber composition may contain, e.g., 30 to 100 phr of carbon black. The expression "phr" stands for parts by weight in relation to 100 parts by weight of pure rubber (elastomer). Conductive rubber may be obtained from a mix of different rubber compositions, provided that the resulting volume resistivity is as defined above. Conductive rubber can be obtained by blending elastomer(s) with one or more electrically conducting materials, such as, e.g., the already mentioned carbon black, carbon fibers, carbon nanotubes, graphite, graphene, metal particles (e.g., in the form of a powder, flakes, filaments, etc.)
The expression "non-conductive rubber", as used herein, designates rubber having a volume resistivity at a room temperature (20°C) equal to or greater than 10⁸ Ω·cm. Non-conductive rubber may be obtained by using non-conducting filler or reinforcing material(s). However, non-conductive rubber may contain electrically conducting components, provided that the resulting volume resistivity is higher than the above-defined threshold value. Non-conductive rubber may be produced, e.g., by starting from the recipe of a conductive rubber composition and replacing all or significant part of carbon black (or other electrically conducting filler) with non-conducting filler, such as, e.g, silica, anhydrous silic acid, calcium carbonate, titanium dioxide, clay, etc. and/or by blending a silica as a reinforcing agent at a high rate in a raw material rubber.

The expressions "axial" and "axially" are used herein to refer to lines or directions that are parallel to the axis of rotation of the tire.

The expression "equatorial plane" means the plane perpendicular to the tire's axis of rotation and passing through the geometrical center of the tire's tread.

The expressions "radial" and "radially" are used to mean the direction of a line intersecting the tire's axis of rotation at right angle.

The expression "meridian plane" is used to mean a plane that contains the tire's axis of rotation.

The term "bead core" means an annular tensile member, e.g., a stell bead bundle, that seats the tire on the rim and maintains it in position.

The expression "belt package" (also: "breaker package") means a structure of at least two rubber-coated steel cord layers, woven or unwoven, between the tread and the carcass ply. The belt package provides strength to the tire, stabilizes the tread and prevents cuts or perforations in the tread from reaching the carcass ply.

The term "carcass ply", as used herein, designates a continuous layer of rubber-coated reinforcing cords extending from one bead to the other by describing an open toroidal form. The carcass ply may comprise turnup portions wrapped around the bead cores.

The term "sidewall" designates the axially outer parts of a tire that provide protection for the carcass ply and withstand flexing and weathering.

In the present document, the verb "to comprise" and the expression "to be comprised of' are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also the features can be combined across embodiments without departing from the invention, unless it follows from context that features cannot be combined.

### Brief Description of the Drawings

The invention will be described by way of example and with reference to the accompanying drawings in which:
FIG. 1 is a cross sectional view of a tire according to an embodiment of the invention, cut along a meridian plane thereof;
FIG. 2 is a cross sectional view of a variant of the tire of FIG. 1;
FIG. 3 is a cross sectional view of a tire according to a further embodiment of the invention, cut along a meridian plane thereof; and
FIG. 4 is a cross sectional view of a variant of the tire of FIG. 3.

### Detailed Description of Preferred Embodiments of the Invention

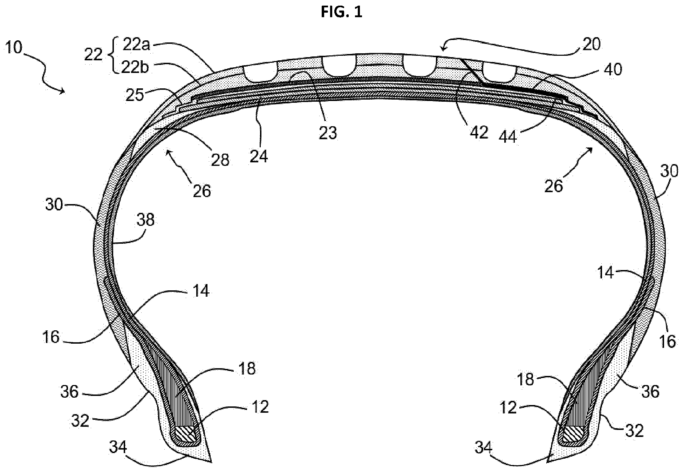

A first embodiment of a pneumatic ultra-low rolling resistance (ULRR) tire in accordance with an embodiment of the invention is illustrated in FIG. 1. Pneumatic tire 10 includes a pair of bead cores 12, which serve to secure the tire 10 to a wheel. The tire 10 further includes a carcass ply 14, which extends between the bead cores 12 so as to confer the tire its generally toroidal shape. The carcass ply 14 is wrapped around the bead cores 12 and terminates in respective turnup portions 16 arranged adjacent the main toroidal portion of the carcass ply 12. Annular apexes 18 arranged in the radially inner sidewall portion, between the bead cores 12, the turnup portions 16 and the main portion of the carcass ply 14 serve as fillers to provide progressive transition from the rather stiff bead portion into the more flexible sidewall portion. A tread 20 is formed in the radially outer part of the tire 10. The tread 20 is formed of a tread band 22, comprising one or more tread layers 22a, 22b and tread base 23 and rests on a belt package 24, which provides stability to the tread 20 and prevents cuts or perforations in the tread band 22 from reaching the carcass ply 14. The belt package 24 comprises an overlay coat 25 adjacent to the tread base 23.

The zones in which the tread portion and the sidewall portions meet are generally referred to as the shoulder portions 26 of the tire 10. In each shoulder portion 26, the tire 10 comprises a respective shoulder wedge 28 resting on the carcass ply 14 and serving as a support for the axially outer end of the belt package 24 and the axially outer extremity of the tread band 22.

In the sidewall portions of the tire 10, the axially outer sides of the carcass ply 14 are covered with the sidewalls 30. The sidewalls 30 protect the carcass ply 14, and together with the carcass ply define the flexing behavior of the tire, and withstand weathering. On the radially inward side, the sidewalls 30 connect to the chafer portions 32. The chafer portions 32 include each a radially innermost toe guard 34 and a chafer 36.

The interior of the tire 10 is lined with an innerliner 38.

To reduce the rolling resistance of tires, rubber mixes traditionally used in the tire carcass and the tread need to be replaced by less hysteric rubbers. A way to achieve this is to reduce the carbon black content of the rubbers and to use other reinforcement agents, such as, e.g., silica. However, rubbers suitable to achieve the desired lowest rolling resistance, e.g., rolling resistance class A according to EU Regulation 2020/740, i.e., a rolling resistance coefficient (RRC) ≤ 6.5 N/kN for C1 tires (tires for cars), ≤ 5.5 N/kN for C2 tires (tires for vans) or ≤ 4.0 N/kN for C3 tires (tires for heavy-duty vehicles), are non-conductive. Accordingly, tires exhibiting good performance in terms of rolling resistance are currently considered as challenging in terms of electrical conductivity, which is needed in practice to prevent charge build-up between ground and the vehicle.

In the ULRR tire of FIG. 1 at least the tread band 22, the tread base 23, the overlay coat 25 and the sidewall comprise non-conductive rubber. The shoulder wedges 28, the carcass ply 14 and the chafer portion 32 (including toe guard 34 and chafer 36) contain conductive rubber. A tread chimney component 40 comprising conductive rubber is arranged to extend from the one of the shoulder wedges 28 to the rolling surface. The chimney component 40 extends annularly around the tire. A part of the tread chimney component, the chimney 42, extends across the tread band 22. In the illustrated embodiment, the chimney 42 has generally the shape of the frustrum of a cone. If the cone's aperture angle is about 180°, the chimney 42 takes generally the shape of an annulus. The chimney is connected to a further part of the tread chimney component, the chimney base 44, which is arranged adjacent the overlay coat so as to replace the tread base 23 on an axial extent. The chimney base 44 is connected to the shoulder wedge 28. A conductive path is thus formed from the tread surface to the toe guard 34. The conductive path comprises the chimney 42, the chimney base 44, the shoulder wedge 28, the carcass ply 14, the chafer 36 and the toe guard 34.

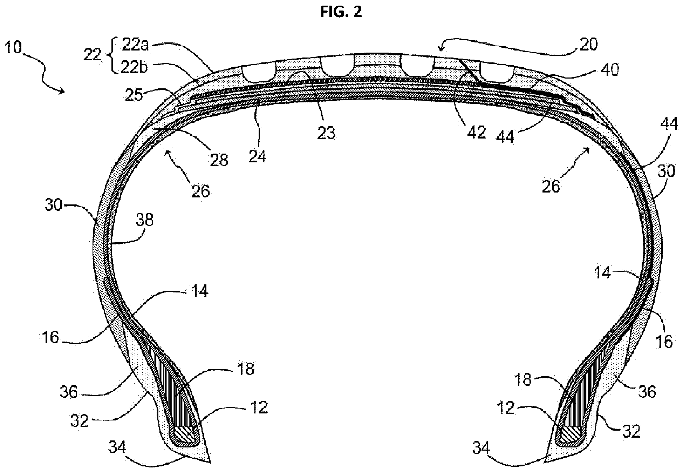

FIG. 2 illustrates a variant of the embodiment of FIG. 1, which may be advantageous if the carcass ply 14 is not sufficiently conductive by itself. In this case, a ply coat comprising conductive rubber and extending at least from the shoulder wedge 28 to the chafer portion 32 may be provided. Such conductive ply coat is arranged electrically in parallel with the carcass ply 14, which efficiently reduces electrical resistance in the sidewall portion of the tire. Apart from that difference, the tire of FIG. 2 is identical to the tire of FIG. 1 and the reader may refer to the description above of the embodiment shown FIG. 1. In addition to a ply coat comprising conductive rubber or as an alternative thereto, gas bleeder cords also functioning to conduct electrical charge from the shoulder wedge 28 to the chafer portion 32 (electrically conducting bleeder cords) may be provided.

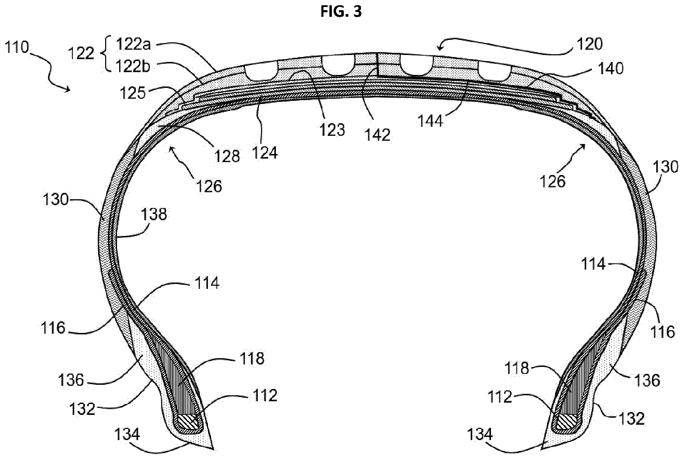

FIG. 3 illustrates a further embodiment of an ULRR pneumatic tire 110 in accordance with aspects of the invention. Pneumatic tire 110 includes first and second axially spaced bead cores 112. A carcass ply 114 extends between the first and second bead cores 112 so as to confer the tire 110 its generally toroidal shape. Carcass ply 114 terminates in first and second turnup portions 116 wrapped around the first and second bead cores 112, respectively. First and second apexes 118 are arranged in the radially inner sidewall portion, between the respective bead core 112, the respective turnup portion 116 and the respective main portion of the carcass ply 114. A tread 120 is formed in the radially outer part of the tire 110. The tread 120 comprises a tread band 122, itself comprising one or more tread layers 122a, 122b and a tread base 123. The tread 120 is supported on its radially inner side by a belt package 124. The belt package 124 comprises an overlay coat 125 adjacent to the tread base 123.

In the first and second shoulder portions 126 of the tire 110, a first and a second shoulder wedges 128 are provided. First and second shoulder wedges 128 are supported by the carcass ply 114 and serve as supports for the axially outer ends of the belt package 124 and the axially outer extremities of the tread band 122.

In the sidewall portions of the tire 110, the axially outer sides of the carcass ply 114 are covered with first and second sidewalls 130. On their radially inward sides, the first and second sidewalls 130 connect to first and second chafer portions 32, respectively. Each chafer portion 132 includes each a radially innermost toe guard 134 and a chafer 136. The interior of the tire 110 is lined with an innerliner 138.

At least the tread band 122, the tread base 123, the overlay coat 125 and the sidewalls 130 comprise non-conductive rubber mixes. The shoulder wedges 128, the carcass ply 114 and the chafer portions 132 (including toe guards 134 and chafers 136) contain conductive rubber. A tread chimney component 140 comprising conductive rubber is arranged to extend from the first and/or the second shoulder wedge 128 to the rolling surface. The chimney component 140 extends annularly around the tire 110. A part of the tread chimney component 140, the chimney 142, extends across the tread band 122. In the illustrated embodiment, the chimney 42 has generally the shape of a flat annulus (like a washer) arranged essentially in the equatorial plane of the tire 110. The chimney 142 connects to another part of the tread chimney component 140, the chimney base 144, which is arranged adjacent the overlay coat so as to replace the tread base 123 in part of its height throughout an axial extent from the chimney 142 to the first axial end of the tread base 123. The chimney base 144 is connected to one of the shoulder wedges 128. A conductive path, which comprises the chimney 142, the chimney base 144, the first shoulder wedge 128, the carcass ply 114 and the first chafer portion 132 (including chafer 136 and toe guard 134) is thus formed from the tread surface to the toe guard 134.

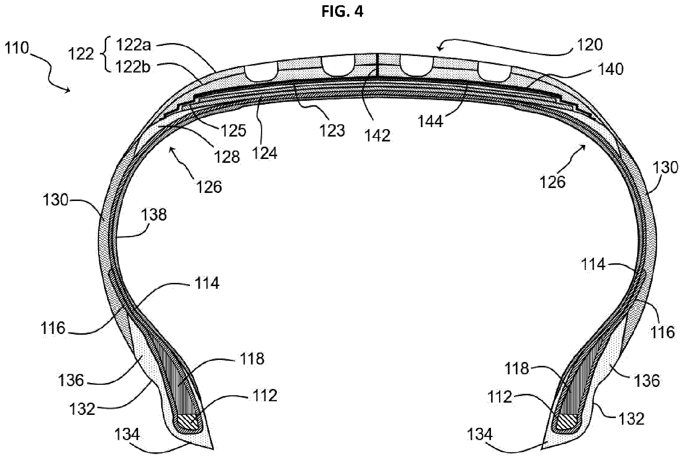

FIG. 4 illustrates a variant of the embodiment of FIG. 3. In the variant of FIG. 4, the chimney base 142 extends from the first shoulder wedge to the second shoulder wedge, adjacent a tread base 123 of reduced thickness (height). According to the variant illustrated in FIG. 4, a first and a second conductive paths are provided between the tread surface and the toe guard 134 and have the chimney 142 in common. The first conductive path is as described with reference to FIG. 3, while the second conductive path comprises the chimney 142, the (other side of) the chimney base 144, the second shoulder wedge 128, the carcass ply 114 and the second chafer portion 132 (including chafer 136 and toe guard 134).

Although FIGS. 3 and 4 show the chimney 142 to be located in the equatorial plane of the tire 110, it may also be located axially offset therefrom. As in the embodiment discussed with reference to FIG. 1, the carcass ply could be arranged to include a conductive ply coat extending at least from the first and/or the second shoulder wedge to the first and/or the second chafer portion, respectively, to decrease electrical resistance across the first and/or second conductive path.

## Claims

1. A tire (10, 110) including:
axially spaced apart annular bead cores (12, 112);
a carcass ply (14, 114) extending between the bead cores;
a belt package (24, 124) arranged radially outwardly of the carcass ply, the belt package comprising an overlay coat (25, 125);
a tread (20, 120) disposed radially outwardly of the belt package, the tread comprising a tread band (22a, 22b. 122a, 122b) providing a radially outer rolling surface of the tire and a tread base (23, 123) adjacent the overlay coat;
a sidewall (30, 130) overlying the carcass in a region between the belt package and one of the bead cores;
a chafer portion (32, 132) adjacent to a radially inner portion of the sidewall and positioned around at least a portion of the bead core for contacting a rim; and
a shoulder wedge (28, 128) arranged in a shoulder portion of the tire between the sidewall and the belt package, the shoulder wedge being at least partially inserted between the belt package and the carcass ply;
wherein the tread (20, 120) includes a tread chimney component (40, 140) extending from the shoulder wedge to the rolling surface, at least part of the tread chimney component extending across the tread band;
wherein the overlay coat, the tread band except for the tread chimney component, the tread base and the sidewall are made from non-conductive rubber; and
wherein a conductive path between the rolling surface and the rim is provided across the tread chimney component (40, 140), the shoulder wedge (28, 128), the carcass ply (14, 114) and the chafer portion (32, 132).

2. The tire of claim 1, wherein the chafer portion (32, 132) includes a radially innermost toe guard (34, 134) and a chafer (36, 136) adjacent to the toe guard and to the sidewall, and, optionally, wherein both the toe guard and the chafer are made from conductive rubber.

3. The tire according to claim 1 or 2, wherein the carcass ply (14, 114) includes a conductive ply coat extending at least from the shoulder wedge to the chafer portion.

4. The tire according to at least one of the previous claims, wherein the tread chimney component (40, 140) comprises a chimney base (44, 144) adjacent the overlay coat and a chimney (42, 142) extending across the tread band (22a, 22b, 122a, 122b) from the chimney base (44, 144) to the rolling surface.

5. The tire according to at least one of the previous claims, wherein the chimney base (44, 144) replaces the tread base (23, 123) between the chimney (42, 142) and the shoulder wedge (28, 128) or wherein the chimney base (44, 144) replaces part of a height of the tread base (23, 123) between the chimney (42, 142) and the shoulder wedge (28, 128).

6. A tire (10, 110) including:
first and second axially spaced apart annular bead cores (12, 112);
a carcass ply (14, 114) extending between the first and second bead cores;
a belt package (24, 124) arranged radially outwardly of the carcass ply, the belt package comprising an overlay coat (25, 125);
a tread (20, 120) disposed radially outwardly of the belt package, the tread comprising a tread band (22a, 22b, 122a, 122b) providing a radially outer rolling surface of the tire and a tread base (23, 123) adjacent the overlay coat;
a first and a second sidewall (30, 130) overlying the carcass in a region between the belt package and the first and the second bead core, respectively;
a first chafer portion (32, 132) adjacent to a radially inner portion of the first sidewall and positioned around at least a portion of the first bead core for contacting a rim;
a second chafer portion (32, 132) adjacent to a radially inner portion of the second sidewall and positioned around at least a portion of the second bead core for contacting the rim; and
a first shoulder wedge (28, 128) arranged in a first shoulder portion of the tire between the first sidewall and the belt package, the first shoulder wedge at least partially inserted between the belt package and the carcass ply;
wherein the tread (20, 120) includes a tread chimney component (40, 140) extending from the first shoulder wedge to the rolling surface, at least part of the tread chimney component extending across the tread band;
wherein the overlay coat, the tread band except for the tread chimney component, the tread base, and the first and second sidewalls are made from non-conductive rubber; and
wherein a conductive path between the rolling surface and the rim is provided across the tread chimney component (40, 140), the first shoulder wedge (28, 128), the carcass ply (14, 114) and the first chafer portion (32, 132).

7. The tire of claim 6 further including a second shoulder wedge (28, 128) arranged in a second shoulder portion (26, 126) of the tire between the second sidewall and the belt package, the second shoulder wedge being at least partially inserted between the belt package and the carcass ply.

8. The tire of claim 6 or 7, wherein the second shoulder wedge (28, 128) is made from non-conductive rubber and/or wherein a further conductive path between the rolling surface and the rim is provided across the tread chimney component, the second shoulder wedge, the carcass ply and the second chafer portion.

9. The tire according to at least one of the previous claims 6 to 8, wherein each of the first and second chafer portions (32, 132) includes a radially innermost toe guard (34, 134) and a chafer (36, 136) adjacent to the toe guard and to the first or second sidewall (30, 130).

10. The tire according to at least one of the previous claims 6 to 9, wherein the carcass ply (14, 114) includes a conductive ply coat extending at least from the first shoulder wedge to the first chafer portion.

11. The tire according to at least one of the previous claims 6 to 10, wherein the tread chimney component (40, 140) comprises a chimney base (44, 144) adjacent the overlay coat and a chimney (42, 142) extending from the chimney base to the rolling surface, the chimney corresponding to the part of the tread chimney component that extends across the tread band.

12. The tire according to at least one of the previous claims 6 to 11, wherein the chimney base (44, 144) extends axially from the first shoulder wedge to the chimney without extending axially beyond the chimney.

13. The tire according to at least one of the previous claims 6 to 12, wherein the tread chimney component (40, 140) comprises a chimney base (44, 144) adjacent the overlay coat and a chimney (42, 142) extending across the tread band from the chimney base to the rolling surface and wherein the chimney base extends axially from the first shoulder wedge to the second shoulder wedge.

14. The tire according to at least one of the previous claims, wherein the chimney (42, 142) is located substantially in an equatorial plane of the tire.

15. The tire according to at least one of the previous claims 1 to 13, wherein the chimney (42, 142) is located axially offset the equatorial plane of the tire.
